# EUROPEAN PATENT APPLICATION

(11) **EP 2 875 895 A1**
(43) Date of publication of application: **27.05.2015**
(21) Application number: 13194220.3
(22) Date of filing: 25.11.2013
(51) Int. Cl.: B23H 3/00, B23H 7/10

(54) **Method for wire electrochemical machining of metals**

(71) Applicant: Otto, Mark, 1240 Kamnik (SI); Zander, Georg, 57234 Wilnsdorf (DE)
(72) Inventor: Otto, Mark, 1240 Kamnik (SI); Zander, Georg, 57234 Wilnsdorf (DE)
(74) Representative: Pipan, Marjan

(57) **Abstract**

The object of the invention is a method for wire electrochemical machining of metals. The system is not provided with a longitudinal movement of a wire electrode, which allows a simplified construction of the machine and consequently a reduced price of the same.

In the method for wire electrochemical machining of metals of the invention a wire electrode (1) in a workpiece (2), when moved in direction of an arrow (B), rotates around its longitudinal axis in direction of an arrow (A) or the wire electrode (1) and the wire electrodes (1',1") that can have a non-symmetrical cross-section are periodically moved in direction of an arrow (C), i. e. in the plane of a cut they make.

## Description

The object of the invention is a method for wire electrochemical machining of metals. The system is not provided with a longitudinal movement of a wire electrode, which allows a simplified construction of the machine and consequently a reduced price of the same. The invention belongs to class B23 M//26 of the International Patent Classification.

The technical problem that is successfully solved by the present invention is removal of »debris« from an inter-electrode gap without a longitudinal movement of a wire.

Among methods of electrical removal for machining of metals a method of electrochemical machining (ECM) has gained ground apart from the electrical discharge machining (EDM) method.

EDM has two subgroups: submersible electrical discharge machining (SEDM), wherein the shape of an electrode is precisely mapped into a workpiece, and wire electrical discharge machining (WEDM), wherein a metallic workpiece is cut by a wire.

In the electrochemical method, the metal is removed from a workpiece due to an anode solution in an electrolytic liquid by electric voltage between a wire electrode (cathode) and a workpiece (anode).

Anodic dissolution of a workpiece signifies transition of positively charged metallic ions from the surface of a workpiece (anode) into an electrolytic liquid which takes the marked ions from the anode to the cathode thus setting up electric current in the operative gap.

The wire electrode acts with its side surface and moves in the plane of a cut thus creating a desired shape in the workpiece. The wire electrode in the electrochemical method does not get worn. The method is strongly dependant on thermodynamic and hydrodynamic processes in the operative gap. These processes ensure acting of positive ions from the material of the workpiece, removal of ions from the surface of the anode and flushing of (cleaning) debris from electrochemical machining from the operative gap. Intensity of removal of the electrolyte from the gap affects the marked processes. Precision of machining is reduced by inequality of the anode solution and when the electrolyte is fed under pressure, the inequality of the anode solution strongly increases and fails to meet the requirements.

Currently, ECM only knows the technology of submersion. No-one has ever managed to develop the wire method into a working technology by the technology of electrochemical removal.

The task and goal of the invention is to fill this technological gap and advantages of ECM over EDM, which are perfect surfaces in a single machining step without cracking and heat exposed area, without wear of the electrode and at higher capacity of removal. A further task is to use this method for a wire method.

The method for electrochemical machining of metals according to the invention makes use of a rotating wire in machining, the cross-section of which wire is not rotationally symmetrical, or a pair of wire electrodes with any cross-section that rotate around a common rotation axis. The rotation of the wire electrode can be further upgraded by a periodical shift of the same in the plane of a cut executed by said wire electrode or by a pair of wire electrodes.

In the method for wire electrochemical machining of metals of the invention a wire electrode 1 in a workpiece 2, when moved in direction of an arrow B, rotates around its longitudinal axis in direction of an arrow A or the wire electrode 1 and the wire electrodes 1',1" are periodically moved in direction of an arrow C, i. e. in the plane of a cut they make.

The method for the wire electrochemical machining of metals of the invention will be described in more detail by way of an embodiment and figures, in which:
**Figure 1** shows a schematic view of advancement of a wire electrode through a workpiece;
**Figure 2** shows a wire electrode of a non-symmetrical cross-section;
**Figure 3** shows a wire electrode of a funnel-shaped cross-section;
**Figure 4** shows a schematic view of a variant with two wire electrodes;
**Figure 5** shows a variant with two wire electrodes;
**Figure 6** shows a schematic view of advancement of a wire electrode through a workpiece with additional movement.

The method for wire electrochemical machining of metals with a servo device for advancing electrodes is substantially based on rotation of the wire electrode 1 within the workpiece 2 when shifted in direction of the arrow B. The wire electrode 1 rotates around its longitudinal axis in direction of the arrow A. When the wire electrode 1 rotates, the electrolyte from the operating gap can be simultaneously and equally fed. The speed of replacement (restoration) of the electrolyte in the gap depends on the viscosity of the electrolyte and the rotation rate of the wire electrode 1.

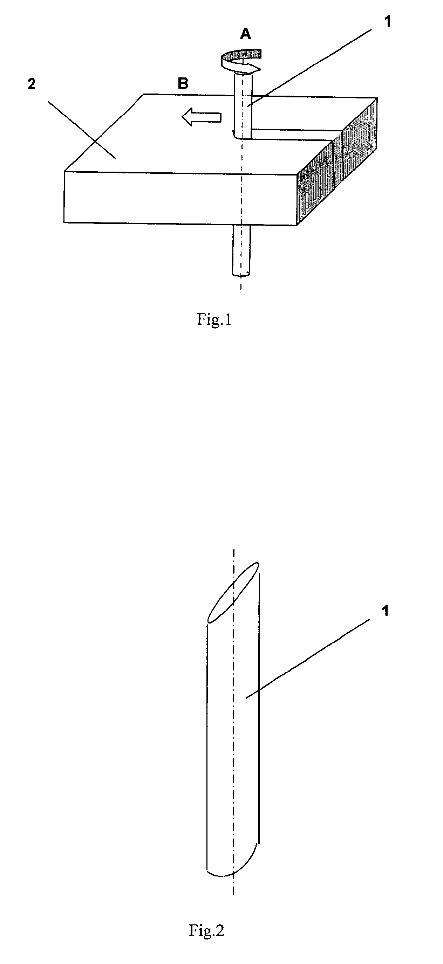

If the cross-section of the wire electrode 1 is not rotationally symmetrical with respect to its longitudinal axis (Figure 2), the movement of the electrolyte in the operative gap increases. Voltage is applied only when the distance between the wire electrode 1 and the workpiece 7 is minimal and the intensity of electrolyte movement is herewith increased. Removal of a metal from evacuation of waste from machining can thus be separated.

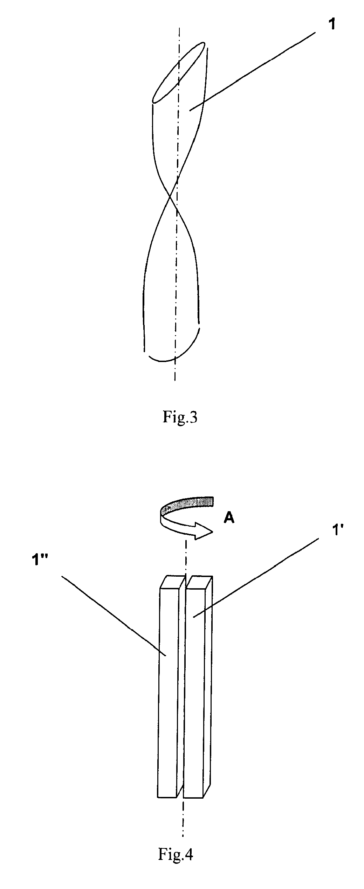

The non-symmetrical cross-section of the wire electrode 1 can also have the shape of a funnel along its longitudinal axis as shown in Figure 3. Such a shape even increases the movement of the electrolyte.

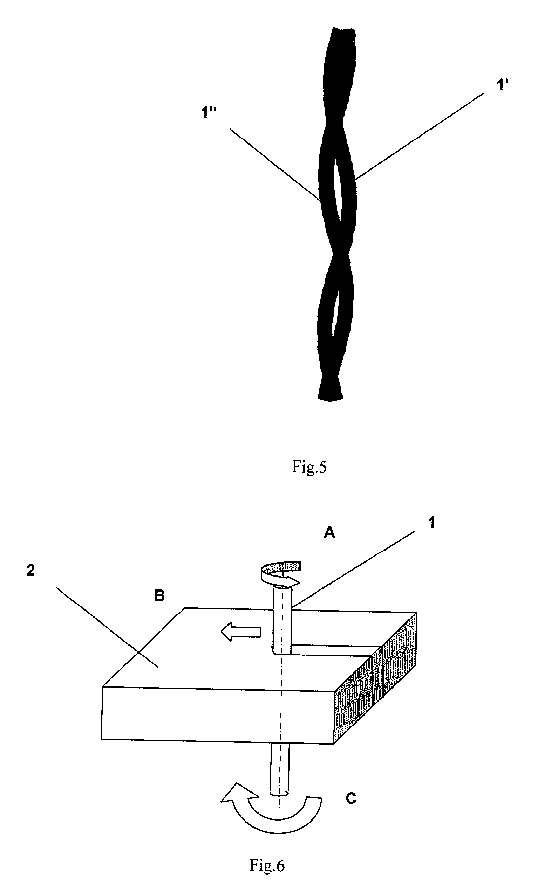

A variant solution is an embodiment, wherein at least two parallel wire electrodes 1',1" having any cross-section move within the workpiece 2, said electrodes rotating around a common axis of rotation. The wire electrodes 1',1" can also be interlaced with each other (Figure 5).

To increase and regulate the movement of the electrolyte a periodic shift of the wire electrode 1 or of the wire electrodes 1',1" in the plane of the cut in direction of an arrow C can be applied.

The method of the invention contributes to an increased accuracy of electrochemical machining with a wire electrode. This method becomes competitive with electrical discharge wire machining, whereas no costs are incurred with the purchase of a wire and a construction of the machine becomes much simpler.

The method for wire electrochemical machining of metals of the invention is carried out at an identical amount of flushing after a shift or length of machining.

By the method described in the appended claims a considerably more efficient flushing is reached, and this is why the electrochemical method can be applied as a cutting method with a wire electrode.

## Claims

1. A method for wire electrochemical machining of metals comprising a servo device for shifting electrodes
**characterized in that**
a wire electrode (1) in a workpiece (2) when moved in direction of an arrow (B) rotates around its longitudinal axis in direction of an arrow (A).

2. Method for wire electrochemical machining of metals according to claim 1
**characterized in that**
the cross-section of the wire electrode (1) is not rotationally symmetrical with respect to its longitudinal axis.

3. Method for wire electrochemical machining of metals according to claim 1 and 2
**characterized in that**
the rotational non-symmetrical cross-section of the wire electrode (1) has a shape of a funnel along its longitudinal axis.

4. Method for wire electrochemical machining of metals
**characterized in that**
within a workpiece when shifted in direction of the arrow (B) at least two parallel wire electrodes (1',1") of any cross-section advance, said electrodes rotating around a common axis of rotation.

5. Method for wire electrochemical machining of metals according to claim 4
**characterized in that**
the wire electrodes (1',1") are spirally interlaced.

6. Method for wire electrochemical machining of metals according to claims 1 to 5
**characterized in that**
the wire electrode (1) or the wire electrodes (1',1") periodically move in direction of an arrow (C), i. e. in the plane of a cut they make.
